# EUROPÄISCHE PATENTSCHRIFT

(11) **EP 1 600 683 B1**
(45) Veröffentlichungstag und Bekanntmachung des Hinweises auf die Patenterteilung: **22.07.2009**
(21) Anmeldenummer: 05103794.3
(22) Anmeldetag: 09.05.2005
(51) Int. Cl.: F16L 37/14, F16L 27/08

(54) **Lösbare Kupplungsmuffe und Herstellungsverfahren für eine lösbare Kupplungsmuffe**
Separable coupling box and manufacturing process for a separable coupling box
Manchon d'accouplement démontable et procédé de fabrication d'un manchon d'accouplement démontable

(30) Priorität: 19.05.2004 DE 102004024714
(43) Veröffentlichungstag der Anmeldung: 30.11.2005
(73) Patentinhaber: ContiTech Schlauch GmbH, 30165 Hannover (DE)
(72) Erfinder: Haberjan, Horst, 37186 Moringen (DE); Bornemann, Axel, 37191 Katlenburg-Lindau (DE)
(74) Vertreter: Finger, Karsten

(56) Entgegenhaltungen:
- EP-A- 0 392 234
- EP-A- 0 579 127
- EP-A- 1 065 427

## Beschreibung

Die Erfindung betrifft eine lösbare Kupplungsmuffe aus Kunststoff zur Verbindung eines medienführenden Schlauches mit einem aggregateseitigen Anschlussstutzen, die folgende Merkmale aufweist:
■ einen Abschnitt für den Schlauchanschluss mit
   - einem abgewinkelten oder geraden Anschlussrohr,
■ einen Abschnitt zum Aufstecken auf den Anschlussstutzen mit
   - einer die Verdrehung zwischen Kupplungsmuffe und Anschlussstutzen verhindernden Verdrehsicherung,
   - einer Dichtung zur Abdichtung der Kupplungsmuffe gegen den Anschlussstutzen,
   - einem die Dichtung fixierenden Sperrring und
■ einer die Kupplungsmuffe auf dem Anschlussstutzen festhaltenden Haltefeder.

Derartige Kupplungsmuffen sind in Form von Kühlwasser- oder Ladeluftkupplungen beispielsweise im Automobilbau bekannt. Sie weisen meist vereinheitlichte, drehfeste Anschlussstutzen auf, die beispielsweise an einem Wasserkühler, einem Motorblock oder einem Ladeluftkühler eines Kraftfahrzeugs angebracht sind. Auf diese Anschlussstutzen sind die ebenfalls standardisierten Kupplungsmuffen aufsteckbar, wobei die Kupplungsmuffen durch die in entsprechende Nuten der Anschlussstutzen einrastenden Haltefedern auf den Anschlussstutzen festgehalten werden. An den Kupplungsmuffen ist der jeweilige Schlauch befestigt, wobei das Anschlussrohr für den Schlauch in unterschiedlichen Winkelstellungen zur Muffenachse angeordnet sein kann.

Zur sicheren und dauerhaften Abdichtung zwischen Anschlussstutzen und Kupplungsmuffe ist es erforderlich, die Verdrehung zwischen Anschlussstutzen und Kupplungsmuffe zu verhindern. Dazu dient im allgemeinen eine Verdrehsicherung, die meist an den aggregateseitigen Anschlussstutzen angebracht ist und in eine entsprechende Ausnehmung in der Kupplungsmuffe eingreift. Die Verdrehsicherung ist jedoch aufgrund der meist in Kraftfahrzeugen vorherrschenden Enge der Einbauräume nicht beliebig platzierbar. Daher ist es erforderlich, Kupplungsmuffen mit einer gegenüber der Lage der Verdrehsicherung für jeden Anwendungsfall angepassten axialen und radialen Winkellage des Anschlussrohres einzusetzen.

Üblicherweise werden derartige Kupplungsmuffen aus Kunststoff im Spritzgussverfahren hergestellt. Dabei ist für jede Form der Kupplungsmuffe ein eigenes Spritzgusswerkzeug erforderlich. An die Halbfertigteile werden anschließend in gesonderten Arbeitsgängen die Dichtungen, die Sperrringe und die Haltefedern montiert. Als Dichtungen werden meist O-Ringe eingesetzt. Die Sperrringe dienen dazu, die Dichtungen sicher in den Kupplungsmuffen festzuhalten. Die EP 0 392 234 A2 zeigt eine Kupplungsmuffe, bei der auf eine Verdrehsicherung verzichtet wurde.

In der DE 199 46 260 C1 ist eine Schnellkupplung mit einem einstückigen Gehäuse gezeigt, welche in einem einzigen Werkzeugelement hergestellt ist. Das Kupplungsgehäuse kann aus Kunststoff hergestellt sein und weist einen Aufsteckabschnitt und einem geraden Anschlussabschnitt auf. In das Kupplungsgehäuse sind zwei O-Ring-Dichtungen eingebracht, die durch einen Stützring und durch eine Hülse gehalten werden. Die Schnellkupplung weist eine Verdrehsicherung auf. In die Schnellkupplung ist ein Stecknippel einer Fluidleitung einsteckbar.

Die DE 197 56 008 A1 offenbart ebenfalls eine Schnellkupplung aus einem einstückigen Kunststoffgehäuse mit einem Aufsteck- und einem Anschlussabschnitt, in den eine O-Ring-Dichtung eingebracht ist, die durch einen im Gehäuse festgeschweissten Sperring gehalten wird. Auch diese Kupplung weist eine Verdrehsicherung auf. In die Schnellkupplung ist ein ebenfalls Anschlussstutzen einsteckbar, der durch eine Haltefeder am Herausgleiten gehindert wird.

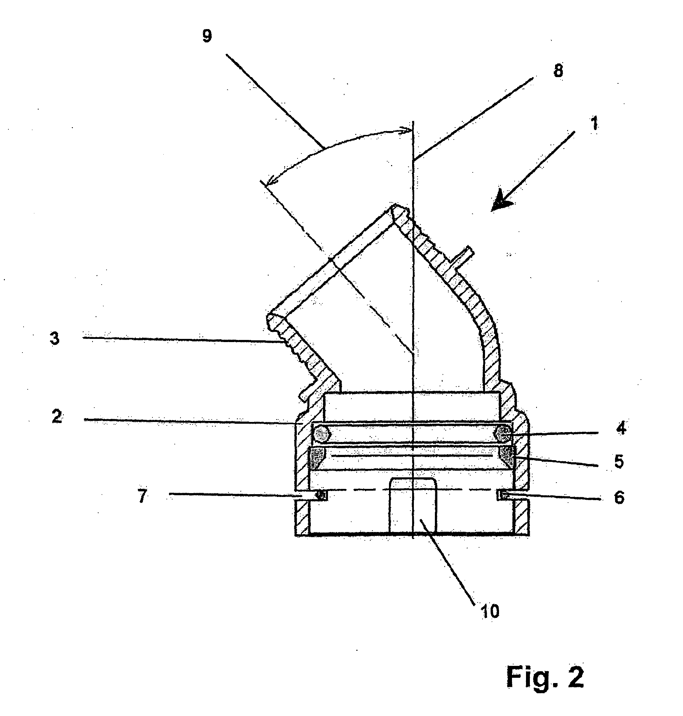

In Fig. 2 ist eine zur den oben genannten ähnliche Kupplungsmuffe mit einer Verdrehsicherung im Querschnitt dargestellt, wie sie als "VDA - Kupplung" im Automobilbau bekannt ist. Die Kupplungsmuffe 1 weist einen Abschnitt 2 zu Aufstecken auf einen hier nicht gezeigten Anschlussstutzen und einen Abschnitt für den Schlauchanschluss mit einem Anschlussrohr 3 für einen hier nicht gezeigten Schlauch auf. Im Abschnitt 2 sind in der dem zur Befestigung des Schlauchs vorgesehenen entgegengesetzten Öffnung eine Dichtung 4 und ein Sperrring 5 angeordnet. Eine Haltefeder 6 ist in Ausnehmungen 7 des Abschnittes 2 angeordnet. Das Anschlussrohr 3 bildet mit der Muffenachse 8 einen axialen Winkel 9. In eine als radial nach außen weisende Ausbuchtung 10 des Abschnittes 2 greift ein hier nicht gezeigtes Verdrehsicherungselement des ebenfalls nicht gezeigten aggregateseitigen Anschlussstutzens ein. Die Ausbuchtung 10 wird im Folgenden vereinfachend als Verdrehsicherung 10 bezeichnet. Im vorliegenden Beispiel beträgt der radiale Winkel zwischen der Verdrehsicherung 10 und dem Anschlussrohr 3 unveränderbar 90°.

Die geschilderten Kupplungsmuffen haben die Nachteile, dass bei gegebener Abwinkelung des Anschlussrohres für jede radiale Winkelstellung zwischen Verdrehsicherung und abgewinkeltem Anschlussrohr zur Herstellung ein eigenes Spritzgusswerkzeug benötigt wird und Dichtung, Sperrring und Haltefeder in separaten Arbeitsgängen montiert werden müssen.

Der Erfindung liegt die Aufgabe zugrunde, eine Kupplungsmuffe der eingangs beschriebenen Art zu schaffen, die eine leichte Montage auch in engen Einbauverhältnissen ermöglicht und mit vermindertem Werkzeug- und Montageaufwand herstellbar ist.

Diese Aufgabe wird dadurch gelöst, dass die Kupplungsmuffe aus zwei Teilen aufgebaut ist, nämlich
■ einem Schlauchanschlussteil mit zwei Abschnitten,
   - dessen erster Abschnitt durch ein gegen die Muffenachse axial abgewinkeltes oder gerades Anschlussrohr gebildet ist und
   - dessen zweiter Abschnitt durch einen ringförmigen Ansatz mit einem radial nach außen gerichteten Bund und einer Dichtungsaufnahme in Form eines Absatzes im Innendurchmesser des Ansatzes gebildet ist und
■ einem Muffenstück mit einer Verdrehsicherung, wobei der zweite Abschnitt des Schlauchanschlussteils und das Muffenstück unter Festlegung einer beliebigen radialen Winkelstellung von Abwinkelungsrichtung des Anschlussrohres zur Verdrehsicherung mindestens formschlüssig fest miteinander verbunden sind.

Dadurch, dass die Kupplungsmuffe zweiteilig aufgebaut ist, ergibt sich der Vorteil, dass Muffenstück und Schlauchanschlussteil zueinander gedreht hergestellt werden können, so dass durch die Lage vom Schlauchanschlussteil zum Muffenstück beliebige radiale Winkelstellungen zwischen Verdrehsicherung im Muffenstück und Abwinkelung des Anschlussrohres ausführbar sind.

In einer Weiterbildung der Erfindung ist der die Dichtung haltende Sperrring fest zwischen Schlauchanschlussteil und Muffenstück eingeschlossen.

Diese Anordnung hat den Vorteil, dass Dichtung und Sperrring bereits nach Abschluss der Spritzvorgänge in ihrer vorgesehenen Position befmdlich und gegen Herausfallen gesichert sind. Dadurch können zwei nachgeschaltete Arbeitsgänge entfallen. Der Sperrring muss nicht eingepresst werden, was vorteilhafterweise weniger genaue Toleranzen von Kupplungsmuffe und Sperrring erfordert.

Die Erfindung betrifft weiterhin ein Verfahren zur Herstellung einer Kupplungsmuffe nach den Ansprüchen 1 und 2. Das Verfahren ist durch folgende Schritte gekennzeichnet:
■ Spritzen eines Schlauchanschlussteils im Kunststoff-Spritzgussverfahren mit axial gegen die Hauptachse der Kupplungsmuffe abgewinkeltem oder geradem Anschlussrohr in einem mehrteiligen geschlossenen Kunststoff-Spritzgusswerkzeug,
■ Öffnen des Werkzeugs an dem zylindrischen Ansatz des Schlauchanschlussteils,
■ Positionierung einer Dichtung und eines Sperrrings vor oder in einer in dem zylindrischen Ansatz des Schlauchanschlussteils angeordneten Öffnung, wobei die Dichtung in Richtung auf das Innere der Öffnung in dem zylindrischen Endabschnitt vor dem Sperrring zu liegen kommt,
■ Schließen des den Schlauchanschlussteil enthaltenden Werkzeugteils mit einem weiteren, die Form des Muffenstückes mit Verdrehsicherung enthaltenden Werkzeugteil, wobei die Dichtung und der Sperrring in ihrer endgültigen Stellung positioniert werden und die Verdrehsicherung des Muffenstückes in korrekter radialer Winkellage zum Schlauchanschlussteil angeordnet wird,
■ Spritzen des Muffenstückes, wobei das Muffenstück den zylindrischen Ansatz des Schlauchanschlussteils radial von außen umschließt und der Muffenstück mindestens formschlüssig mit dem Schlauchanschlussteil fest verbunden wird,
■ Öffnen des Werkzeugs und Entnahme der fertig gespritzten Kupplungsmuffe,
■ Montage der Haltefeder in Ausnehmungen des Muffenstückes.

Dieses Verfahren hat den Vorteil, dass die Kupplungsmuffe zweiteilig ausgeführt werden kann und die Dichtung und der Sperrring bereits während des Spritzvorganges in ihre endgültige Lage gebracht werden können. Die Zweiteiligkeit der Kupplungsmuffe ermöglicht eine vorteilhafte leichte Einstellbarkeit der radialen Winkellage zwischen Verdrehsicherung und Abwinkelung des Anschlußrohres in einem einzigen mehrteiligen Werkzeug.

Mit Hilfe des geschilderten erfindungsgemäßen Verfahrens lassen sich auf einfach Weise Kupplungsmuffen mit beliebiger Winkelstellung zwischen Verdrehsicherung und Abwin kelung des Anschlussrohres herstellen. Es ist für jeden axialen Winkel zwischen Anschlussrohr und Hauptachse der Muffe nur noch ein mehrteiliges Werkzeug erforderlich. Das Werkzeugteil für den Muffenstück ist in allen Anwendungsfällen mit demselben axialen Winkel des Anschlussrohres dasselbe. Damit lassen sich für eine Vielzahl von Einbauverhältnissen, auch in beengten Motorräumen von Kraftfahrzeugen, leicht montierbare, kostengünstige Kupplungsmuffen zur Verfügung stellen.

Anhand der Zeichnung wird nachstehend ein Ausführungsbeispiel der Erfindung näher erläutert. Es zeigt
Fig. 1 eine erfindungsgemäße zweiteilige Kupplungsmuffe im Querschnitt,
Fig. 2 eine Kupplungsmuffe nach dem Stand der Technik.

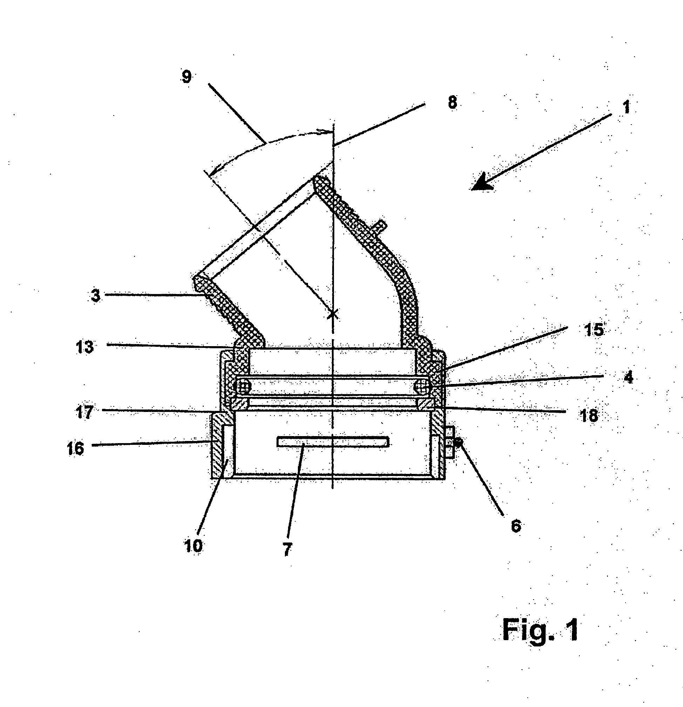

Die in Fig. 1 gezeigte erfmdungsgemäße Kupplungsmuffe 1 weist ein Schlauchanschlussteil 13 mit einem Anschlussrohr 3 auf. Das Anschlussrohr 3 ist mit einem Winkel 9 gegen die Hauptachse 8 der Kupplungsmuffe 1 abgewinkelt. An dem zylindrischen, dem Anschlussrohr 3 gegenüberliegenden Endabschnitt des Schlauchanschlussteils 13 ist am Au-βenumfang des Endabschnittes ein radial nach außen vorstehender Bund 15 angeordnet.

Die Kupplungsmuffe 1 weist weiterhin ein Muffenstück 16 auf, der den Bund 15 des Schlauchanschlussteils 13 umgreift, wobei das Schlauchanschlussteil 13 beim Anspritzen des Muffenstückes 16 etwas anschmilzt, so dass Schlauchanschlussteil 13 und Muffenstück 16 sowohl formschlüssig als auch kraftschlüssig miteinander verbunden sind. In der in dem zylindrischen, dem Anschlussrohr 3 gegenüberliegenden Endabschnitt des Schlauchanschlussteils 13 angeordneten zylindrischen Öffnung des Muffenstückes 16 ist eine radial nach außen gerichtete Verdrehsicherung 10 angeordnet, in die ein entsprechendes, hier nicht gezeigtes Verdrehsicherungselement eines ebenfalls nicht gezeigten Anschlussstutzens eingreift. Die Haltefeder 6 umgreift das Muffenstück 16, wobei die Schenkel der Haltefeder 6 in Ausnehmungen 7 geführt werden, von denen hier nur eine gezeigt ist. Dabei ist die Haltefeder 6 so angeordnet, dass die Schenkel im Bereich der Ausnehmungen 7 in die Öffnung des Muffenstückes hineinragen. Beim Aufstecken der Kupplungsmuffe 1 auf den nicht gezeigten Anschlussstutzen werden die Schenkel der Haltefeder 6 durch eine Anschrägung des Anschlussstutzens auseinandergedrückt und schnappen im vollständig aufgesteckten Zustand in entsprechende Nuten des Anschlussstutzens ein. Damit wird ein sicherer Sitz der Kupplungsmuffe auf dem Anschlussstutzen erreicht.

Zwischen dem dem Anschlussrohr 3 gegenüberliegenden Ende des Schlauchanschlussteils 13 und einem dem Schlauchanschlussteil 13 zugewandten Absatz 17 des Muffenstückes 16 ist ein Sperrring 18 angeordnet, der die Dichtung 4 in Position hält, wobei der Sperrring 18 und die Dichtung 4 zwischen Schlauchanschlussteil 13 und Muffenstück 16 unverlierbar eingebettet sind.

Im dargestellten Beispiel zeigt das abgewinkelte Anschlussrohr 3 in die gleiche Richtung wie die Verdrehsicherung 10. Durch entsprechende Stellung des Muffenstückes 16 zum Schlauchanschlussteil 13 beim Spritzvorgang sind beliebige radiale Winkelstellungen zwischen der Verdrehsicherung 10 und der Abwinkelungsrichtung des Anschlussrohres 3 herstellbar.

Im Folgenden wird das Verfahren zur Herstellung einer derartigen Kupplungsmuffe gargestellt. Zunächst wird das Schlauchanschlussteils (13) im Kunststoff-Spritzgussverfahren mit axial gegen die Hauptachse (8) der Kupplungsmuffe (1) abgewinkeltem oder geradem Anschlussrohr (3) gespritzt. Das dazu verwendete Werkzeug ist aus mehreren Teilen aufgebaut, die einzeln geöffnet, geschlossen und gegeneinander verschoben werden können. Nach der Öffnung des Werkzeugs an dem zylindrischen Endabschnitt des Schlauchanschlussteils (13), das dem Anschlussrohr (3) gegenüberliegt, wird vor oder in der in dem zylindrischen, dem Anschlussrohr (3) gegenüberliegenden Endabschnitt angeordneten Öffnung eine Dichtung (4) und ein Sperrring (18) poositioniert, wobei die Dichtung (4) in Richtung auf das Innere der Öffnung in dem zylindrischen Endabschnitt vor dem Sperrring (18) zu liegen kommt. Anschließend wird der das Schlauchanschlussteil (13) enthaltende Werkzeugteil mit einem weiteren, die Form des Muffenstückes (16) mit Verdrehsicherung (10) enthaltenden Werkzeugteil geschlossen, wobei die Dichtung (4) und der Sperrring (18) im Schlauchanschlussteil (13) in ihrer endgültigen Stellung positioniert und definiert in dem Schlauchanschlussteil (13) eingepresst werden und die Verdrehsicherung (10) des Muffenstückes (16) in korrekter radialer Winkellage zum Schlauchanschlussteil (13) angeordnet wird. In diesem Werkzeugteil wird das Muffenstück (16) gespritzt, wobei dieses den zylindrischen, dem Anschlussrohr (3) gegenüberliegenden Endabschnitt des Schlauch anschlussteils (13) radial von Außen umschließt und so das Muffenstück (16) mindestens formschlüssig mit dem Schlauchanschlussteil (13) fest verbunden wird. Nach Erstarrung des Muffenstückes (16) wird das Werkzeug geöffnet und die fertig gespritzte Kupplungsmuffe (1) entnommen oder ausgeworfen. Danach erfolgt noch die Montage der Haltefeder (6) in Ausnehmungen (7) des Muffenstückes (16).

### Bezugszeichenliste

- 1: einteilige Kupplungsmuffe nach dem Stand der Technik
- 2: Gehäuse
- 3: Anschlussrohr
- 4: Dichtung
- 5: Sperrring
- 6: Haltefeder
- 7: Ausnehmungen für die Haltefeder 6
- 8: Muffenachse
- 9: axialer Winkel zwischen Anschlussrohr3 und Muffenachse 8
- 10: Ausbuchtung/Verdrehsicherung
- 13: Schlauchanschlussteil
- 15: Bund
- 16: Muffenstück
- 17: Absatz
- 18: Sperrring

## Patentansprüche

1. Lösbare Kupplungsmuffe (1) aus Kunststoff zur Verbindung eines medienführenden Schlauches mit einem aggregateseitigen Anschlussstutzen, die folgende Merkmale aufweist:
■ einen Abschnitt für den Schlauchanschluss mit
- einem abgewinkelten oder geraden Anschlussrohr (3),
■ einen Abschnitt zum Aufstecken auf den Anschlussstutzen mit
- einer die Verdrehung zwischen Kupplungsmuffe (1) und Anschlussstutzen verhindernden Verdrehsicherung (10),
- einer Dichtung (4) zur Abdichtung der Kupplungsmuffe (1) gegen den Anschlussstutzen,
- einen die Dichtung (4) fixierenden Sperrring (18) und
■ eine die Kupplungsmuffe (1) auf dem Anschlussstutzen festhaltende Haltefeder (6),
**dadurch gekennzeichnet,**
**dass** die Kupplungsmuffe (1) aus zwei Teilen aufgebaut ist, nämlich
■ einem Schlauchanschlussteil (13) mit zwei Abschnitten,
- dessen erster Abschnitt durch ein gegen die Muffenachse (8) axial abgewinkeltes oder gerades Anschlussrohr (3) gebildet ist und
- dessen zweiter Abschnitt durch einen ringförmigen Ansatz mit einem radial nach außen gerichteten Bund (15) und einer Dichtungsaufnahme in Form eines Absatzes (17) im Innendurchmesser des Ansatzes gebildet ist und
■ einem Muffenstück (16) mit einer Verdrehsicherung (10), wobei der zweite Abschnitt des Schlauchanschlussteils (13) und das Muffenstück (16) unter Festlegung einer beliebigen radialen Winkelstellung von Abwinkelungsrichtung (9) des Anschlussrohres (3) zur Verdrehsicherung (10) mindestens formschlüssig fest miteinander verbunden sind.

2. Kupplungsmuffe nach Anspruch 1, **dadurch gekennzeichnet, dass** der die Dichtung (4) haltende Sperrring (18) fest zwischen Schlauchanschlussteil (13) und Muffenstück (16) positioniert ist.

3. Verfahren zur Herstellung einer lösbaren Kupplungsmuffe nach Anspruch 1 und 2, **gekennzeichnet durch** folgende Schritte:
- Spritzen eines Schlauchanschlussteils (13) im Kunststoff-Spritzgussverfahren mit axial gegen die Hauptachse (8) der Kupplungsmuffe (1) abgewinkeltem oder geradem Anschlussrohr (3) in einem mehrteiligen geschlossenen Kunststoff-Spritzgusswerkzeug,
- Öffnen des Werkzeugs an dem zylindrischen Endabschnitt des Schlauchanschlussteils (13), das dem Anschlussrohr (3) gegenüberliegt,
- Positionierung einer Dichtung (4) und eines Sperrrings (18) vor oder in einer in dem zylindrischen, dem Anschlussrohr (3) gegenüberliegenden Endabschnitt angeordneten Öffnung, wobei die Dichtung (4) in Richtung auf das Innere der Öffnung in dem zylindrischen Endabschnitt vor dem Sperrring (18) zu liegen kommt,
- Schließen des das Schlauchanschlussteil (13) enthaltenden Werkzeugteils mit einem weiteren, die Form des Muffenstückes (16) mit Verdrehsicherung (10) enthaltenden Werkzeugteil, wobei die Dichtung (4) und der Sperrring (18) im Schlauchanschlussteil (13) in ihrer endgültigen Stellung positioniert und definiert in dem Schlauchanschlussteil (13) eingepresst werden und die Verdrehsicherung (10) des Muffenstückes (16) in korrekter radialer Winkellage zum Schlauchanschlussteil (13) angeordnet wird,
- Spritzen des Muffenstückes (16), wobei das Muffenstück (16) den zylindrischen, dem Anschlussrohr (3) gegenüberliegenden Endabschnitt des Schlauchanschlussteils (13) radial von Außen umschließt und das Muffenstück (16) mindestens formschlüssig mit dem Schlauchanschlussteil (13) fest verbunden wird,
- Öffnen des Werkzeugs und Entnahme der fertig gespritzten Kupplungsmuffe (1),
- Montage der Haltefeder (6) in Ausnehmungen (7) des Muffenstückes (16).

## Claims

1. Detachable coupling sleeve (1) made of plastic for connecting a media-conducting hose to an equipment-side connector, said coupling sleeve (1) having the following features:
• a section for the hose connection, comprising
- an angled or straight connecting tube (3),
• a section for slipping onto the connector, comprising
- an anti-rotation locking means (10) preventing rotation between coupling sleeve (1) and connector,
- a seal (4) for sealing the coupling sleeve (1) against the connector,
- a locking ring (18) fixing the seal (4), and
• a retaining spring (6) holding the coupling sleeve (1) in place on the connector,
**characterized in that**
the coupling sleeve (1) is composed of two parts, namely
• a hose connecting part (13) comprising two sections,
- the first section of which is formed by a connecting tube (3) angled axially relative to the sleeve axis (8) or by a straight connecting tube (3) and
- the second section of which is formed by an annular extension having a radially outwardly directed collar (15) and a seal receptacle in the form of a step (17) in the inside diameter of the extension, and
• a sleeve piece (16) comprising an anti-rotation locking means (10), wherein the second section of the hose connecting part (13) and the sleeve piece (16) are fixedly connected to one another at least in a positive-locking manner, with any desired radial angular position of angling direction (9) of the connecting tube (3) relative to the anti-rotation locking means (10) being established.

2. Coupling sleeve according to Claim 1, **characterized in that** the locking ring (18) holding the seal (4) is fixedly positioned between hose connecting part (13) and sleeve piece (16).

3. Method of producing a detachable coupling sleeve according to Claims 1 and 2, **characterized by** the following steps:
- injecting a hose connecting part (13) with a connecting tube (3) which is angled axially with respect to the main axis (8) of the coupling sleeve (1) or with a straight connecting tube (3) by the plastic injection moulding process in a multi-part closed plastic injection moulding tool,
- opening the tool at the cylindrical end section of the hose connecting part (13), said cylindrical end section being opposite the connecting tube (3),
- positioning a seal (4) and a locking ring (18) in front of or in an opening arranged in the cylindrical end section opposite the connecting tube (3), wherein the seal (4) comes to lie in the direction of the interior of the opening in the cylindrical end section in front of the locking ring (18),
- closing the tool part containing the hose connecting part (13) with a further tool part containing the mould of the sleeve piece (16) with anti-rotation locking means (10), wherein the seal (4) and the locking ring (18) are located in the hose connecting part (13) in their final position and are pressed in place in a defined manner in the hose connecting part (13), and the anti-rotation locking means (10) of the sleeve piece (16) is arranged in the correct radial angular position relative to the hose connecting part (13),
- injecting the sleeve piece (16), wherein the sleeve piece (16) radially encloses from outside the cylindrical end section of the hose connecting part (13) which is opposite the connecting tube (3), and the sleeve piece (16) is fixedly connected to the hose connecting part (13) at least in a positive-locking manner,
- opening the tool and removing the finished injection-moulded coupling sleeve (1),
- fitting the retaining spring (6) in recesses (7) of the sleeve piece (16).

## Revendications

1. Manchon d'accouplement (1) démontable en matière synthétique pour relier un flexible conduisant un agent à une tubulure de raccordement située côté agrégat et présentant les caractéristiques suivantes :
- un segment pour le raccord de flexible avec :
un tube de raccordement (3) coudé ou droit ;
- un segment d'enfichage sur la tubulure de raccordement avec :
une sécurité antitorsion (10) empêchant toute torsion entre le manchon d'accouplement (1) et la tubulure de raccordement ;
un joint d'étanchéité (4) pour étanchéifier le manchon d'accouplement (1) par rapport à la tubulure de raccordement ;
une bague d'arrêt (18) fixant le joint d'étanchéité (4) ; et
- un ressort d'arrêt (6) maintenant fixement le manchon d'accouplement (1) sur la tubulure de raccordement, **caractérisé en ce que** le manchon d'accouplement (1) est réalisé en deux parties ; notamment :
- une partie de raccord de flexible (13) dotée de deux segments ;
dont le premier segment est formé par un tube de raccordement (3) coudé dans le plan axial ou droit contre l'axe de manchon (8) ;
dont le deuxième segment est formé par une saillie de forme annulaire doté d'une attache (15) orientée radialement vers l'extérieur et d'un logement de joint d'étanchéité prenant la forme d'un retrait (17) dans le diamètre intérieur de la saillie ; et
- une pièce de manchon (16) dotée d'une sécurité antitorsion (10), le deuxième segment de la partie de raccord de flexible (13) et la pièce de manchon (16) étant reliés fixement au moins par complémentarité de formes l'un à l'autre par détermination d'une position angulaire radiale quelconque de la direction de déviation (9) du tube de raccordement (3) pour la sécurité antitorsion (10).

2. Manchon d'accouplement selon la revendication 1, **caractérisé en ce que** la bague d'arrêt (18) maintenant le joint d'étanchéité (4) est positionnée fixement entre la partie de raccord de flexible (13) et la pièce de manchon (16).

3. Procédé de fabrication de manchon d'accouplement démontable selon la revendication 1 et 2, **caractérisé par** les étapes suivantes :
injection d'une partie de raccord de flexible (13) dans le cadre d'un procédé de moulage par injection de matière synthétique avec un tube de raccordement (3) coudé ou droit dans le plan axial contre l'axe principal (8) du manchon d'accouplement (1) dans un outil de moulage par injection de matière plastique fermé en plusieurs parties ;
ouverture de l'outil au niveau du segment terminal cylindrique de la partie de raccord de flexible (13) située à l'opposée du tube de raccordement (3) ;
positionnement d'un joint d'étanchéité (4) et d'une bague d'arrêt (18) devant ou dans une ouverture disposée dans le segment terminal cylindrique opposé au tube de raccordement (3), le joint d'étanchéité (4) venant à reposer devant la bague d'arrêt (18) dans le segment terminal cylindrique, en direction de l'intérieur de l'ouverture ;
fermeture de la partie d'outil contenant la partie de raccord de flexible (13) avec une autre partie d'outil contenant le moule de la pièce de manchon (16) avec la sécurité antitorsion (10), le joint d'étanchéité (4) et la bague d'arrêt (18) étant pressés de façon à être positionnés et disposés dans leur position définitive dans la partie de raccord de flexible (13) dans une partie de raccord de flexible (13) et la sécurité antitorsion (10) de la partie de manchon (16) étant disposée dans une position angulaire radiale correcte par rapport à la partie de raccord de flexible (13) ; injection de la pièce de manchon (16), la pièce de manchon (16) entourant le segment terminal cylindrique opposé au tube de raccordement (3) de la partie de raccord de flexible (13) radialement vers l'extérieur et la pièce de manchon (16) étant reliée fixement au moins par complémentarité de forme à la partie de raccord de flexible (13) ;
ouverture de l'outil et retrait du manchon d'accouplement (1) à la fin de l'injection ;
montage du ressort d'arrêt (6) dans les évidements (7) de la pièce de manchon (16).
